# EUROPEAN PATENT APPLICATION

(11) **EP 1 176 071 A2**
(43) Date of publication of application: **30.01.2002**
(21) Application number: 01306479.5
(22) Date of filing: 27.07.2001
(51) Int. Cl.: B60S 1/38

(54) **Wiper rubber location**

(30) Priority: 28.07.2000 GB 0018455
(71) Applicant: Trico Products Corporation, Rochester Hills, MI 48309 (US)
(72) Inventor: Robertson, Alistair Duncan, Aberdare, Mid Glamorgan CF44 6RP (GB); Davies, Phillip, Griffithstown, Torfaen NP4 5LQ (GB)
(74) Representative: James, Michael John Gwynne

(57) **Abstract**

Cut out tangs 5 in a vertebra 1 are pressed down to grip into the body of a wiper rubber 2. For this purpose notches 6 are cut into the head 4 of the wiper rubber 2 to receive the tangs 5 which thus resist sliding movement of the wiper rubber in either direction within the end of the vertebra 1.

## Description

A known profiled vertebra for a windscreen wiper assembly locates and supports the head of a profiled wiper rubber. There is a need to ensure that the wiper rubber does not slide out of the vertebra and this invention aims to provide a relatively simple construction for achieving this end.

According to the invention there is provided a profiled vertebra for retaining a wiper rubber of a windscreen wiper blade, the vertebra defining an internal groove along its length for receiving the head of the wiper rubber section, the vertebra having a top wall defining the top of the internal groove, wherein a part of said top wall is cut away on three sides to define a tang which can be depressed into said internal groove to press into the body of a wiper rubber.

The tang, when depressed, grips the wiper rubber and tends to resist any sliding movement of the wiper rubber out of the vertebra. Ideally a further part of the top wall will be cut away to define a further tang whose end faces the free end of the first tang. This, when also depressed, then tends to lock the wiper rubber in the region of the tangs from movement in either direction. Preferably there will be one or a pair of tangs near to both ends of the vertebra. For further security the wiper rubber can have a notch cut in the top surface to receive the or each tang.

In a preferred construction, projecting portions of the sides of the vertebra profile have partially cut-away portions at the same position near to one or both ends and adjacent to a tang, for receiving side supports leading to inturned arms of a claw of a windscreen wiper harness, such that the inturned arms can locate within external grooves in the harness profile beneath said projecting portions.

Thus the claw can readily be snapped into place so that the side supports of the claws are locked into the cut-away portions in the sides of the vertebra. There is then no need for any further locating mechanism for the claw. Furthermore the gripping of the claws into the sides of the vertebra additionally grips the wiper rubber close to the tang (or tangs), thus further reducing the possibility that the wiper rubber can become dislocated from the tang. This is further enhanced if facing tangs are formed to either side of the pair of cut-away portions of the vertebra.

The invention may be performed in various ways and a preferred embodiment thereof will now be described, by way of example, with reference to the accompanying drawings in which:-
Figure 1 is a plan view of an end of a vertebra of a windscreen wiper blade assembly;
Figure 2 is a vertical section on line A-A of Figure 1 showing, additionally, a portion of a wiper rubber held by the vertebra;
Figure 3 is a section on line B-B of Figure 1 through the vertebra and wiper rubber;
Figure 4 is a side view of the wiper rubber shown in Figure 2;
Figure 5 is a section on line C-C of Figure 4 illustrating a wiper rubber of a different profile.
Figure 6 is a plan view of a vertebra and claw assembly of the windscreen wiper harness;
Figure 7 is a side view of the assembly shown in Figure 6;
Figure 8 is an end view of the assembly shown in Figure 6; and
Figure 9 is a vertical section on lines D-D of Figures 6 and 7.

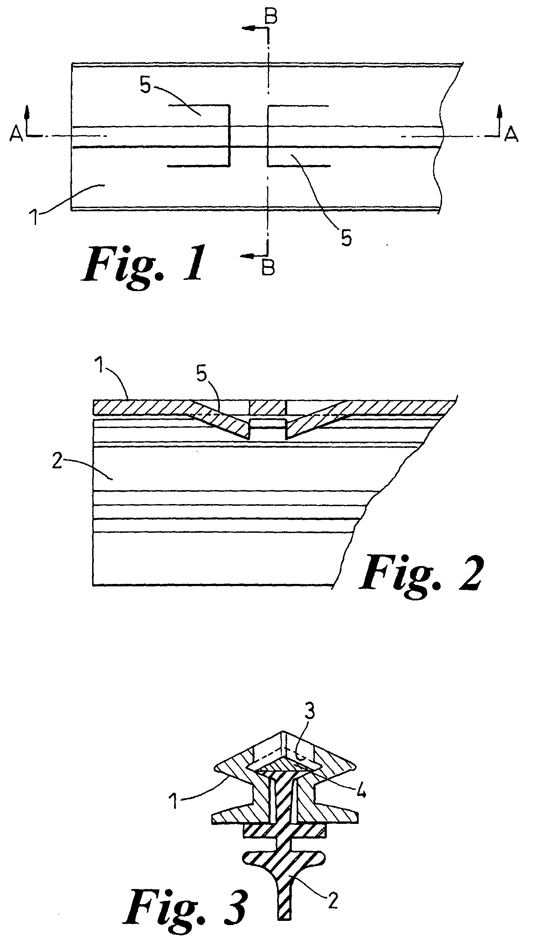

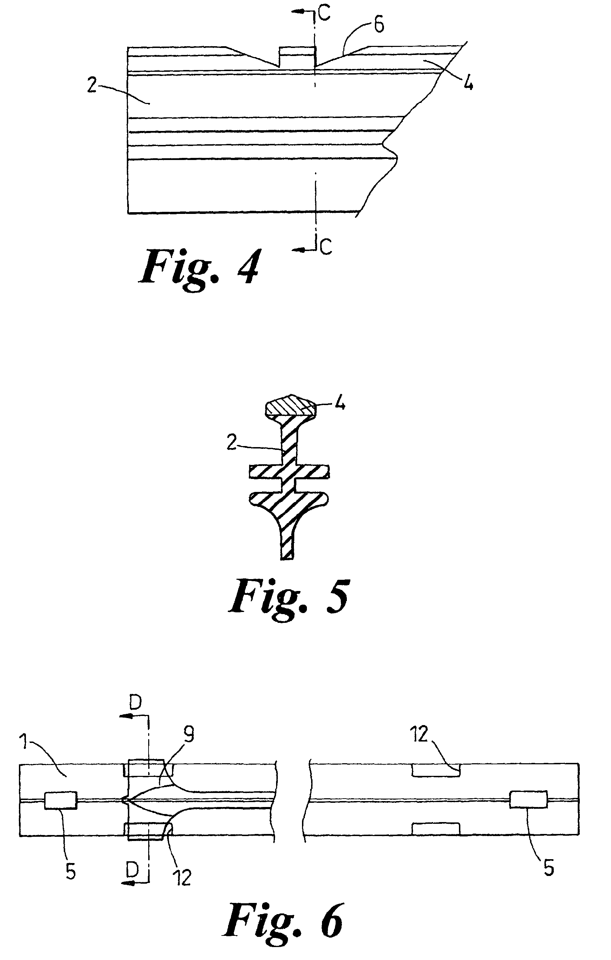

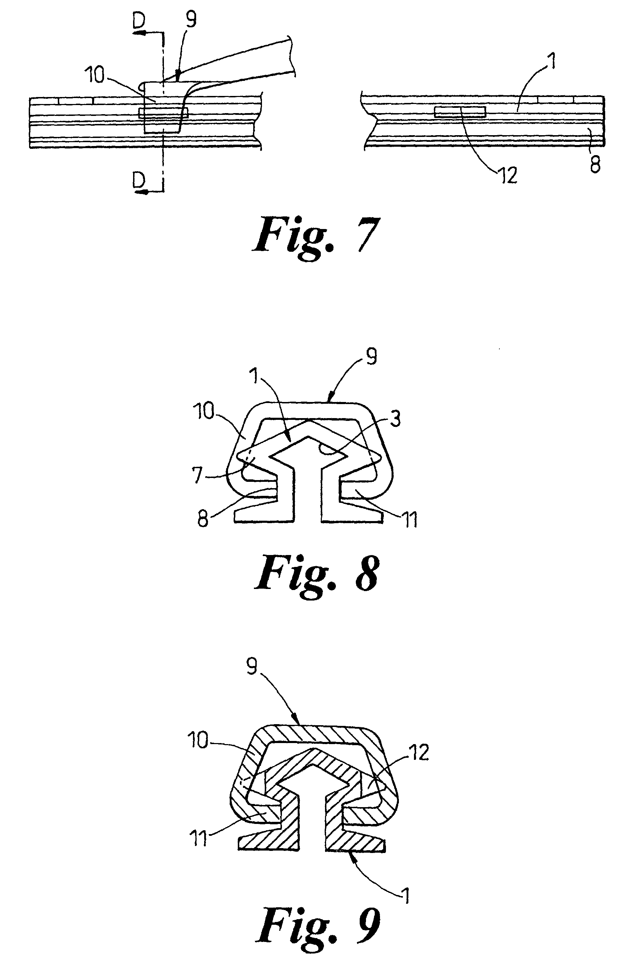

In the arrangement shown in Figures 1 to 3 there is provided a vertebra 1 and a wiper rubber 2. As can be seen from Figure 3 the vertebra 1 incorporates an internal groove 3 in which is slideably received the head 4 of the wiper rubber 2. Figures 1 and 2 illustrate cut out tangs 5 which are pressed down to grip into the body of the wiper rubber 2. For this purpose notches 6 (see Figure 4) are cut into the head 4 of the wiper rubber 2 to receive the tangs 5 which thus resist sliding movement of the wiper rubber in either direction within the end of the vertebra 1. As can be seen from Figure 5 the head 4 of the wiper rubber 2 can be modified to have a different cross section. Figures 6 to 9 indicate a method of connecting a claw of a harness to the vertebra. The vertebra 1 shown in Figures 6 and 7 has the profile as illustrated in Figure 8. Thus the vertebra 1 defines an internal groove 3 for the receipt of a head of a wiper rubber profile. Projecting portions 7 lead back to external grooves 8. A claw member 9 of a windscreen wiper harness is illustrated in each of Figures 6 to 8. This claw member has side supports 10 leading to inturned arms 11 which locate slidably into the grooves 8 of the vertebra 1. At both ends of the vertebra 1 there are formed cut-away portions 12 in the projecting parts 3. These cut-away portions 12 do not interfere with the head of the wiper rubber but do provide locations into which the side supports 10 of the claw 9 are able to locate, so that the claw is essentially fixed relative to the vertebra 1.

A tang will be formed at the position 5 indicated in Figure 6, close to the claw location, so that gripping of the sides of the vertebra 1 by the claw 9 will additionally help to fix the wiper rubber in place. Ideally a further tang will be located at a similar distance inboard of the claw 9 (as in the manner of the pair of tangs 5 illustrated in Figure 1, but spaced somewhat further apart).

## Claims

1. A profiled vertebra for retaining a wiper rubber of a windscreen wiper blade, the vertebra defining an internal groove along its length for receiving the head of the wiper rubber section, the vertebra having a top wall defining the top of the internal groove, wherein a part of said top wall is cut away on three sides to define a tang which can be depressed into said internal groove to press into the body of a wiper rubber.

2. A vertebra according to claim 1, wherein a further part of the top wall is cut away to define a further tang whose end faces the free end of the first tang.

3. A vertebra according to claim 1 or claim 2, incorporating one or a pair of tangs near to both ends of the vertebra.

4. A vertebra according to any one of claims 1 to 3, wherein projecting portions of the sides of the vertebra profile have partially cut-away portions at the same position near to one or both ends and adjacent to a tang, for receiving side supports leading to inturned arms of a claw of a windscreen wiper harness.

5. A vertebra according to claim 4, wherein facing tangs are formed to either side of the pair of cut-away portions of the vertebra.

6. A vertebra according to any one of claims 1 to 5 including a wiper rubber, the wiper rubber having a notch cut in the top surface to receive the or each tang.

7. A vertebra for a wiper rubber and substantially as herein described with reference to the accompanying drawings.

8. Any novel combination of features of a vertebra for a wiper rubber and substantially as herein described and/or illustrated in the accompanying drawings.
